**Europäisches Patentamt**

(19) **European Patent Office**

**Office européen des brevets**

(11) Numéro de publication: **0 185 641**

**B1**

(12) # FASCICULE DE BREVET EUROPÉEN

(45) Date de publication du fascicule du brevet:
**23.11.88**

(51) Int. Cl.⁴: **C 08 F 20/12**

(21) Numéro de dépôt: **85870144.4**

(22) Date de dépôt: **28.10.85**

(54) **Procédé de polymérisation de monomères acryliques et éventuellement de co-monomères non acryliques.**

(30) Priorité: **05.11.84 LU 85627**

(43) Date de publication de la demande:
**25.06.86 Bulletin 86/26**

(45) Mention de la délivrance du brevet:
**23.11.88 Bulletin 88/47**

(84) Etats contractants désignés:
**AT BE CH DE FR GB IT LI NL SE**

(56) Documents cité:
**GB-A-958 868**

**Le dossier contient des informations techniques présentées postérieurement au dépôt de la demande et ne figurant pas dans le présent fascicule.**

(73) Titulaire: **COMPAGNIE INTERNATIONALE DE PARTICIPATION ET D'INVESTISSEMENT CIPARI S.A., 4-10 Boulevard d'Avranches, Luxembourg (LU)**

(72) Inventeur: **Ouhadi, Trazollah, quai Gloesener, 6, B-4020 Liege (BE)**
Inventeur: **Forte, Rosalia, rue des Bayards, 113, B-4000 Liege (BE)**
Inventeur: **Jerôme, Robert, rue des Sorbiers, 6, B-4040 Tilff (BE)**
Inventeur: **Fayt, Roger, route du Condroz, 144, B-4121 Neuville- en- Condroz (BE)**
Inventeur: **Teyssié, Philippe, Bois du Rognac, 85, B-4121 Neuville- en- Condroz (BE)**

(74) Mandataire: **Delleré, Robert, Bureau Vander Haeghen 63, avenue de la Toison d'Or, B-1060 Bruxelles (BE)**

EP 0 185 641 B1

## Description

La présente invention est relative à un procédé de polymérisation de monomères acryliques et éventuellement de co-monomères non acryliques à l'aide d'agents initiateurs ou amorceurs de polymérisation de formule

R - M $\qquad$ (I)

dans laquelle M désigne un métal choisi parmi les métaux alcalins et alcalino-terreux et R désigne un radical alkyle à chaîne droite ou ramifiée contenant 2 à 6 atomes de carbone ou un radical aryle.

On connaît des procédés de polymérisation de monomères acryliques ou méthacryliques, tels que des acrylates et methacrylates d'alkyle, ainsi que des procédés de copolymérisation de tels monomères acryliques ou méthacryliques ainsi que de co-monomères non acryliques, en présence de divers agents initiateurs ou amorceurs de polymérisation, notamment ceux de formule (I) donnée plus haut, comme le sec.-butyl-lithium et d'autres agents initiateurs, comme les alcoolates tertiaires de lithium et des composés organosiliciés, comme des composés contenant des groupes triméthylsilyle.

Il est également connu d'utiliser dans les reactions de polymérisation de monomères acryliques et méthacryliques et de copolymérisation de tels monomères et de co-monomères, des additifs ou des catalyseurs divers, notamment des co-catalyseurs ou additifs contenant par exemple des sources d'ions fluorure, cyanure ou azide ou constitués par un acide de Lewis.

On a découvert à présent qu'il est avantageux d'effectuer la polymérisation de monomères acryliques ou méthacryliques, le cas echéant avec des co-monomères non acryliques, à l'aide d'un catalyseur de formule (I) donnée plus haut, en utilisant un co-catalyseur ou additif constitue d'un sel d'un metal alcalin ou alcalino-terreux, de préférence un halogénure d'un tel métal, comme le chlorure de lithium ou le chlorure de baryum.

On a constaté que le sel de métal alcalin ou alcalino-terreux, tel que le chlorure de lithium, sert à la fois à stabiliser la paire d'ions de l'agent initiateur ou amorceur et la paire d'ions de la chaîne en cours de polymérisation.

L'utilisation d'un sel de métal alcalin ou alcalino-terreux en plus de l'agent initiateur ou amorceur de formule R-M définie plus haut offre, ainsi qu'on a pu le constater, de remarquables avantages. Ainsi, elle permet (1) de contrôler l'initiation de la polymérisation ou copolymérisation, en évitant des réactions secondaires sur le groupe carbonyle du monomère acrylique ou méthacrylique, (2) de contrôler la propagation de la polymérisation en évitant les réactions seconpolymères ou entre une telle chaîne et un monomère, (3) d'inhiber la formation de centres dormants (c'est-à-dire de cyclisations intramoléculaires), ce qui conduit à une meilleure distribution des masses des polymères et copolymères et à la possibilité de préparer des polymères ayant des structures et des masses prédéterminées et (4) de préparer des copolymères séquencés par un seul processus de polymérisation dans un même réacteur.

L'emploi d'un sel de métal alcalin ou alcalino-terreux comme le chlorure de lithium (LiCl) dans le procédé suivant l'invention permet de régler la réactivité de l'agent initiateur ou amorceur. Il diminue avantageusement la réactivité de cet agent initiateur et le rend sélectif vis-à-vis de la double liaison du monomère acrylique ou méthacrylique, plutôt que vis-à-vis du groupe ester de ce monomère.

On a constaté ainsi que l'utilisation d'un sel de métal alcalin ou alcalino-terreux, en particulier d'un halogénure d'un tel métal, notamment un chlorure, bromure, fluorure, iodure de lithium, de potassium, de sodium, de baryum ou de magnésium, de préférence de chlorure de lithium permet, lors de l'utilisation de catalyseurs de formule

R - M $\qquad$ (I)

dans laquelle M désigne un métal alcalin ou alcalino-terreux er R désigne un radical alkyle en $C_1$ à $C_{18}$, de préférence en $C_2$ à $C_6$, plus particulièrement en $C_4$, comme le sec.-butyllithium ou le tert.-butyllithium, pour la polymérisation de monomères acryliques, d'éviter les effets secondaires sur le groupe carbonyle ou sur l'atome d'hydrogène en position $\alpha$ dans le cas d'esters acryliques. Ces effets secondaires ont l'inconvénient de provoquer des arrêts de chaînes polymères, de créer des centres ou sites dormants et de favoriser des réactions de transfert qui empêchent de contrôler la masse moléculaire des polymères. Ces réactions secondaires empêchent aussi la fonctionnalisation terminale des chaînes de polymères par des groupes fonctionnels, tels que des groupes carboxyliques (COOH), sulfoniques ($SO_3H$), hydroxyles (OH) ou amino tertiaires, ainsi que la formation de copolymères séquencés.

L'utilisation des agents additifs du type halogénure de métal alcalin ou alcalino-terreux, tel que le LiCl, selon la présente invention permet de remédier à tous ces inconvénients.

La présente invention concerne donc l'utilisation, dans un procédé de polymérisation ou de copolymérisation de monomères acryliques ou méthacryliques selon le premier paragraphe du présent mémoire, d'un additif ou co-catalyseur constitué d'un sel de métal alcalin ou alcalino-terreux d'un acide minéral ou organique.

Comme exemples de tels additifs ou co-catalyseurs, on peut citer les sels minéraux, en particulier le sulfate, le nitrate, le borate et les halogénures de métaux alcalins et alcalino-terreux, notamment de sodium, potassium, lithium, baryum et magnésium. On préfère utiliser, parmi les halogénures, les chlorure, bromure, iodure et fluorure de lithium, plus particulièrement le chlorure de lithium. On peut cependant utiliser, dans le

2

cadre de l'invention, du chlorure, bromure ou iodure de baryum, du borate de lithium, du nitrate de magnésium, ainsi que du chlorure de sodium ou de potassium.

Les sels de métaux alcalins et alcalino-terreux utilisés suivant l'invention, en particulier le chlorure de lithium, font l'objet d'une forte coordination avec le centre carbanionique responsable de l'amorçage et de la propagation de la polymérisation des esters alkyles des acides acrylique et méthacrylique.

Comme monomères acryliques, on peut utiliser avantageusement, dans le procédé suivant l'invention, les esters des acides acrylique et méthacrylique, les dialkylacrylamides, l'acrylonitrile, le méthacrylonitrile et leurs mélanges.

Le monomère acrylique est, de préférence, un acrylate ou méthacrylate d'alkyle, dont le radical alkyle contient 1 à 18 atomes de carbone, plus particulièrement du méthacrylate de méthyle, de t-butyle ou de benzyle, ce radical alkyle pouvant être substitué par du fluor, un groupe amino tertiaire ou un groupe carbalcoxy, par exemple acétoxy.

Comme co-monomère non acrylique, on utilise avantageusement, dans le procédé suivant l'invention, un co-monomère choisi parmi le butadiène, l'isoprène, les styrènes éventuellement alkylés, les cyclosiloxanes, le vinylnaphtalène et les vinylpyridines. Comme co-monomères styréniques, on peut utiliser l'$\alpha$-méthylstyrène et le tert.-butylstyrène. Dans le co-monomere vinylpyridinique, le groupe vinyle peut être en position 2 ou 4.

Le procédé suivant l'invention permet la préparation de polymères et de copolymères à extrémités de chaînes fonctionnalisées, ainsi que de copolymères séquencés possédant une distribution prédéterminée des masses des chaînes polymères.

Dans le procédé suivant l'invention, les proportions de sel de métal alcalin ou alcalino-terreux, tel que LiCl, peuvent varier fortement, notamment par rapport à l'agent initiateur ou amorceur. Ainsi, la quantité de LiCl peut être, par exemple, largement excédentaire par rapport à la quantité d'agent initiateur. Cette quantité de LiCl peut aussi être égale ou inférieure à la quantité molaire d'agent initiateur ou amorceur.

Dans le procédé suivant l'invention, la polymérisation ou copolymérisation s'opère en l'absence d'humidité et d'oxygène, en présence d'un ou plusieurs solvants choisis parmi les solvants aromatiques, tels que le benzène ou le toluène, ainsi que le tétrahydrofuranne et le diméthylformamide.

Quant à la température de polymérisation ou de copolymérisation, elle peut varier entre -78°C et 0°C.

Le procédé suivant l'invention est illustré par les exemples non limitatifs suivants:

**Exemple 1**

Préparation de polyacrylate de tert.-butyle (t.BuA)

Dans un ballon préalablement séché et en atmosphère d'azote ou d'argon, on introduit 0,1 g (2,4.10⁻³ moles) de chlorure de lithium (LiCl).

On déshydrate complètement le LiCl par chauffage sous vide dans un bain d'huile à 150°C pendant 3 heures, après quoi on laisse revenir le LiCl à la température ambiante sous pression d'azote ou d'argon et on y ajoute 150 ml de tétrahydrofuranne préséché (THF), 0,2 ml d'$\alpha$-méthylstyrène (servant d'indicateur de la déshydratation complète du milieu réactionnel) et, sous agitation, au goutte à goutte, du sec.-butyllithium (s.BuLi) en solution 0,5 molaire dans l'heptane, jusqu'à apparition d'une coloration rouge persistante. Lorsque cette coloration est atteinte, on ajoute 0,5 ml de ladite solution (2,5.10⁻⁴ moles) de s.BuLi.

On porte le mélange à une température de -78°C dans un mélange d'acétone et de carboglace et après 1/2 heure, on ajoute, toujours à -78°C, 90 ml d'une solution benzénique à 10 % en volume d'acrylate de tert.-butyle (t.BuA) (7,9 g de t.BuA), préalablement séchée à l'aide de triéthylaluminium (1 ml de solution 1M dans du benzène) et distillée.

On arrête la réaction après 90 minutes par addition de 5 ml de méthanol (MeOH), après quoi on chasse les solvants (THF, heptane et benzène). On obtient 7,7 g de polymère (rendement: 97,4 %).

L'analyse par chromatographie sur gel perméable (GPC) du polymère donne les valeurs suivantes pour

$\bar{M}$n: masse moyenne en nombre (étalonnage au polystyrène)
$\bar{M}$w: masse moyenne en poids (étalonnage au polystyrène)

$\Delta M = \frac{\bar{M}w}{\bar{M}n}$ : distribution de masse

$\bar{M}$n : 58.000
$\bar{M}$w : 71.800
$\Delta M$ : 1,2

Dans le présent exemple, tout comme dans les exemples suivants, le THF a été préalablement séché sur sodium/benzophénone et 1'$\alpha$-méthylstyrène sur de l'hydrure de calcium (CaH₂).

## Exemple 2

Préparation de polyacrylate de tert.-butyle (t.BuA)

On opère comme dans l'exemple 1, si ce n'est qu'on utilise 0,2 g ($4,8.10^{-3}$ moles) de LiCl et $5.10^{-4}$ moles de s.BuLi, soit une quantité égale au double de la quantité de LiCl et de s.BuLi employée dans l'exemple 1.

On obtient 7,6 g de polymère (rendement: environ 96 %).

L'analyse chromatographique (GPC) donne les résultats suivants:

$$\bar{M}n = 30.000$$
$$\bar{M}w = 39.300$$
$$\Delta M = 1,31$$

L'évolution de la valeur de $\bar{M}n$ suit celle du rapport molaire monomère/amorceur (s.BuLi).

## Exemple 3

Préparation de polyacrylate de t.-butyle (t.BuA)

On opère comme dans l'exemple 1, si ce n'est qu'on utilise 0,25 g ($6.10^{-3}$ moles) de LiCl et $6,5.10^{-4}$ moles de s.BuLi. On obtient 7,7 g de polymère ayant les caractéristiques suivantes:

GPC:
$$\bar{M}n = 22.000$$
$$\bar{M}w = 28.800$$
$$\Delta M = 1,31$$

Le rapport molaire du monomère à l'amorceur ayant diminué par rapport aux exemples 1 et 2, la valeur de $\bar{M}n$ diminue en conséquence.

## Exemple 4

Préparation de polyacrylate de t. butyle (t.BuA)

On opère comme dans l'exemple 1, si ce n'est qu'on utilise 0,14 g ($3,3.10^{-3}$ moles) de LiCl et $3,3.10^{-4}$ moles de s.BuLi. On obtient 7,8 g de polymère (rendement: environ 99 %).

GPC
$$\bar{M}n = 40.000$$
$$\bar{M}w = 48.000$$
$$\Delta M = 1,20$$

On note à nouveau que la quantité de s.BuLi diminuant d'un facteur 2 par rapport à l'exemple 3, la valeur de $\bar{M}n$ augmente dans la même proportion.

## Exemple 5

Préparation de polyacrylate de t.-butyle (t.BuA)

Dans un ballon préalablement séché, on introduit, sous pression d'azote, 0,15 g ($3,5.10^{-3}$ moles) de LiCl.

On déshydrate complètement le chlorure de lithium par chauffage sous vide dans un bain d'huile à 150°C pendant 3 heures.

Après avoir laissé le LiCl revenir à la température ambiante sous pression d'azote, on introduit dans le ballon 100 ml de THF, 0,2 ml (0,18 g; $1,5.10^{-3}$ moles) d'$\alpha$-méthylstyrène et, sous agitation, au goutte à goutte, du s.BuLi, en solution 0,5 molaire dans de l'heptane jusqu'à apparition d'une coloration rouge persistante.

Lorsque cette coloration rouge est atteinte, on ajoute 0,8 ml de la solution de s.BuLi ($4,10^{-4}$ moles de s.BuLi).

On porte ensuite le contenu du ballon à -78°C à l'aide d'un mélange d'acétone et de carboglace et, après 30 minutes, on y ajoute 27 ml d'une solution de t.BuA à 10 % dans un benzène (2,4 g de t.BuA), séchée au préalable sur du triéthylaluminium et distillée.

Après 3 minutes, on prélève une fraction de quelques ml de la solution à des fins d'analyse chromatographique.

# 0 185 641

A la solution restante, on ajoute 18 ml de solution benzénique à 10 % en volume de t.BuA (1,8 g de t.BuA).
Après 30 minutes, on arrête la polymérisation par addition de 5 ml de MeOH.
On chasse les solvants de la fraction prélevée et du produit final.
On obtient au total 3,8 g de polymère (rendement: 100 %).

**Analyse:**

| | |
|---|---|
| Fraction prélevée GPC | $\bar{M}n$ = 10.800 |
| | $\bar{M}w$ = 13.300 |
| | $\Delta M$ = 1,23 |
| Produit final GPC | $\bar{M}n$ = 18.700 |
| | $\bar{M}w$ = 24.500 |
| | $\Delta M$ = 1,31 |

Cet exemple révèle que la réaction de polymérisation est vivante, c'est-à-dire que l'on peut poursuivre la polymérisation par addition d'une quantité supplémentaire de monomère.

## Exemple 6

Préparation de polyacrylate de t.-butyle

Dans un ballon préalablement séché, on introduit, sous pression d'azote, 0,9 g ($2,1.10^{-3}$ moles) de LiCl que l'on sèche sous vide dans un bain d'huile à 150°C, pendant 3 heures.

Au chlorure de lithium refroidi, on ajoute, sous atmosphère d'azote, 150 ml de THF séché sur benzophènone/sodium, 0,2 ml (0,18 g; $1,5.10^{-3}$ moles) d'α-méthylstyrène séché sur $CaH_2$ et, sous agitation, au goutte à goutte, du s.BuLi en solution 0,5 molaire dans de l'heptane jusqu'à coloration rouge persistante.

Lorsque cette coloration rouge est atteinte, on ajoute 0,5 ml de solution de s.BuLi ($1,5.10^{-4}$ moles de s.BuLi).

Dans le mélange amené à -78°C sur acétone/carboglace, on introduit, après 30 minutes, 130 ml de solution de t.BuA (séché sur $AlEt_3$) à 10 % dans le THF (séché sur du styryllithium). On a ainsi ajouté 11,5 g de t.BuA.

On arrête la réaction après 4 minutes par addition de 5 ml de méthanol. On obtient, après avoir chassé le solvant unique de réaction (THF), 1,5 g de polymère (taux de transformation: 13 %).

| | |
|---|---|
| GPC | $\bar{M}n$ = 16.900 |
| | $\bar{M}w$ = 20.300 |
| | $\Delta M$ = 1,2 |

## Exemple 7

Préparation de polyacrylate de t.-butyle

On opère exactement comme dans l'exemple 6, si ce n'est qu'on arrête la réaction après 15 minutes.
On obtient 5,95 g de polymère (rendement: 52 %).

| | |
|---|---|
| GPC | $\bar{M}n$ = 70.400 |
| | $\bar{M}w$ = 85.800 |
| | $\Delta M$ = 1,22 |

## Exemple 8

Préparation de polyacrylate de t.-butyle

On opère exactement comme dans l'exemple 6, si ce n'est qu'on arrête la réaction après 90 minutes.
On obtient 11,5 g de polymère (taux de transformation: 100 %).

5

GPC $\quad\quad$ M̄n = 131.600
$\quad\quad\quad\quad$ M̄w = 176.300
$\quad\quad\quad\quad$ ΔM = 1,34

## Exemple 9

Préparation de polyacrylate de t.-butyle

Dans un ballon séché, on introduit 0,2 g ($4,7.10^{-3}$ moles) de LiCl que l'on sèche dans un bain d'huile à 150°C pendant 3 heures. On laisse revenir jusqu'à la température ambiante sous azote.

On introduit 100 ml de THF séché sur benzophénone/sodium, 0,2 ml d'α-méthylstyrène (0,18 g), une solution 0,5 molaire de s.BuLi dans de l'heptane jusqu'à coloration rouge persistante, puis 1 ml de cette solution ($5.10^{-4}$ moles de s.BuLi).

On porte le mélange à 0°C pendant 1 heure, puis on y introduit goutte à goutte 5 ml d'une solution de t.BuA à 10 % en volume dans du benzène (0,55 g d'acrylate de t.-butyle), après quoi on ajoute rapidement les 4 ml restants de cette solution (3,6 g de t.BuA). On arrête la réaction après 1 heure par addition de 5 ml de méthanol.

Après avoir chassé les solvants, on obtient 3,5 g de polymère.

GPC $\quad\quad$ M̄n = 6.200
$\quad\quad\quad\quad$ M̄w = 8.600
$\quad\quad\quad\quad$ ΔM = 1,4

## Exemple 10

Préparation de polyméthacrylate de méthyle (PMMA)

Dans un ballon préalablement séché, on introduit 0,08 g de LiCl ($1,9.10^{-3}$ moles) que l'on sèche sous vide dans un bain d'huile à 150°C pendant 3 heures.

Après avoir laissé le LiCl revenir à la température ambiante, sous azote, on y ajoute 100 ml de THF séché sur benzophénone/sodium, 100 ml de toluène séché sur de l'hydrure d'aluminium lithium (LiAlH₄), 0,2 ml d'α-méthylstyrène séché sur CaH₂ et une solution 0,4 molaire de sec.-butyllithium (s.BuLi) dans de l'heptane jusqu'à coloration rouge persistante.

Lorsque cette coloration est atteinte, on ajoute encore 0,4 ml de cette solution de sec.-butyllithium ($1,6.10^{-4}$ moles).

On porte le mélange à -78°C dans acétone/carboglace pendant 30 minutes, puis on y ajoute 11 ml de méthacrylate de méthyle (MMA) séché sur du triéthylaluminium (AlEt₃).

Après 1 heure, on arrête la réaction en ajoutant quelques ml de mèthanol, après quoi on précipite le polymère dans du méthanol technique. Après filtration, on obtient 10 g de PMMA.

GPC $\quad\quad$ M̄n = 71.800
$\quad\quad\quad\quad$ M̄w = 84.200
$\quad\quad\quad\quad$ ΔM = 1,17

En opérant exactement comme décrit ci-avant, si ce n'est qu'on n'utilise pas de LiCl, on obtient 10,1 g d'un polymère présentant une dispersion beaucoup plus grande des masses moléculaires.

GPC $\quad\quad$ M̄n = 101.400
$\quad\quad\quad\quad$ M̄w = 174.800
$\quad\quad\quad\quad$ ΔM = 1,7

## Exemple 11

Préparation d'un copolymère acrylate de t.-butylestyrène

Dans un ballon contenant 0,1 g de LiCl ($2,4.10^{-3}$ moles) séché sous vide à 150°C dans un bain d'huile pendant 3 heures et refroidi sous azote jusqu'à la température ambiante, on introduit 150 ml de THF séché sur benzophénone/sodium et 0,1 ml de styrène (0,09 g) séché sur CaH₂.

Après avoir porté le mélange à -78°C, on y ajoute du sec.-butyl-lithium (s.BuLi) en solution 0,5 molaire dans de l'heptane jusqu'à coloration jaune. Lorsque cette coloration jaune est atteinte, on ajoute encore 0,6 ml de la

6

solution de s.BuLi (3.10<sup>-4</sup> moles de s.BuLi) et 7 ml de styrène (6,3 g) séché sur du fluorényl-lithium.

On laisse polymériser pendant 1 heure, puis on ajoute 80 ml d'une solution à 10 % en volume d'acrylate de tert.-butyle dans du benzène (7,1 g de t. BuA) séchée sur du triéthyl-aluminium et distillée. On arrête la réaction à l'aide de méthanol après 90 minutes. On chasse le solvant et on obtient 13,2 g de copolymère.

GPC $\qquad$ $\bar{M}n = 57.000$
$\qquad$ $\bar{M}w = 74.100$
$\qquad$ $\Delta M = 1,3$

**Exemple 12**

<u>Préparation d'un copolymère acrylate de tert.-butyle et isoprène</u>

Dans un ballon séché contenant 0,1 g de chlorure de lithium (LiCl) (2,4.10<sup>-3</sup> moles) séché sous vide dans un bain d'huile à 150°C pendant 3 heures et ramené à la température ambiante, on introduit, sous azote, 50 ml de benzène séché sur $CaH_2$, 1 ml d'une solution 0,5 molaire de sec.-butyl dans l'heptane (5.10<sup>-4</sup> moles de s.BuLi) et 11 ml (7,5 g) d'isoprène séché sur du n-butyl-lithium.

On porte le mélange à 35°C pendant 18 heures.

Après avoir ramené la température du milieu réactionnel à la température ambiante, on y ajoute 0,5 ml (0,45 g) de styrène séché sur du fluorényl-lithium et 20 ml de THF en portant le contenu du ballon à une température de -78°C.

Après une heure, on introduit dans le ballon 50 ml d'une solution de t.BuA à 10 % en volume dans du benzène (4,4 g de t.BuA) séchée sur du triéthylaluminium et distillée.

On arrête la réaction après 90 minutes au moyen de méthanol. Après avoir chassé les solvants, on obtient 12 g de copolymère.

GPC $\qquad$ $\bar{M}n = 42.000$
$\qquad$ $\bar{M}w = 52.500$
$\qquad$ $\Delta M = 1,25$

**Exemple 13**

<u>Préparation d'un copolymère de méthacrylate de méthyle et de styrène</u>

Dans un ballon séché, on introduit sous atmosphère d'azote 0,1 g de LiCl (2,4.10<sup>-3</sup> moles). On sèche le chlorure de lithium par traitement sous vide pendant 3 heures dans un bain d'huile à 150°C.

On laisse revenir le LiCl à la température ambiante et on y ajoute, sous azote, 25 ml de toluène séché sur de l'hydrure de lithium-aluminium ($LiAlH_4$), 0,1 ml (0,09 g) de styrène séché sur $CaH_2$ et une solution 0,5 molaire de sec.-butyl-lithium dans de l'heptane jusqu'à obtention d'une coloration jaune.

Lorsque cette coloration est atteinte, on ajoute encore 0,4 ml de la solution de s.-butyl-lithium (2.10<sup>-4</sup> moles de s.BuLi).

On porte le mélange à -78°C dans un mélange d'acétone et de carboglace, puis on y ajoute 225 ml de THF séché sur du styryl-lithium, puis 12 ml (10,8 g) de styrène séché sur du fluorényl-lithium.

Après 1 heure, on ajoute 12 ml (11,2 g) de méthacrylate de méthyle (MMA) séché sur du triéthylaluminium.

On arrête la réaction après 1 heure au moyen de méthanol. On précipite le copolymère dans 2 litres de méthanol technique et on le filtre. On obtient ainsi 21,9 g de produit.

GPC $\qquad$ $\bar{M}n = 97.000$
$\qquad$ $\bar{M}w = 126.300$
$\qquad$ $\Delta M = 1,3$

On fractionne le produit obtenu, en introduisant 4,21 g de copolymère brut dans un flacon Erlenmeyer, on ajoute 200 ml de cyclohexane, qui est un solvant sélectif du polystyrène, et le système est agité pendant 24 heures à la température ambiante et pendant 48 heures à 40°C. Après filtration de la matière insoluble sur un filtre, lavage et séchage, on obtient 4,12 g de copolymère insoluble. Rendement en copolymère: 98 %.

**Exemple 14**

Préparation d'un copolymère de méthacrylate de méthyle et de styrène

On opère comme dans l'exemple 13, si ce n'est qu'au lieu de chlorure de lithium, on utilise du chlorure de baryum ($BaCl_2$) sous forme déshydratée à raison de 0,5 g ($2.10^{-3}$ moles). On obtient 22 g de produit. Après fractionnement on détermine que le produit de synthèse contient 97,5 % de copolymère.

GPC               $\bar{M}n = 100.600$
$\bar{M}w = 129.700$
$\Delta M = 1,19$

**Exemple 15**

Préparation d'un copolymère de méthacrylate de n-hexyle et de styrène

On opère comme dans l'exemple 13, si ce n'est qu'au lieu de MMA, on utilise 12 ml (10,7 g) de méthacrylate de n-hexyle. On obtient 21,2 g de copolymère.

GPC               $\bar{M}n = 92.600$
$\bar{M}n = 119.400$
$\Delta M = 1,29$

**Exemple 16**

Préparation d'un copolymère de méthacrylate de n-butyle et de styrène

On opère comme dans l'exemple 13, si ce n'est qu'au lieu de MMA, on utilise du méthacrylate de nbutyle à raison de 12 ml (10,8 g). On obtient 21,3 g de produit.

GPC               $\bar{M}n = 95.400$
$\bar{M}w = 124.500$
$\Delta M : 1,3$

**Exemple 17**

Préparation d'un copolymère de méthacrylate de méthyle et d'isoprène

On opère comme dans l'exemple 12, si ce n'est qu'on utilise du méthacrylate de méthyle pur (au lieu d'acrylate de tert-butyle), à raison de 8 ml (7,4 g).
On précipite le copolymère dans 2 litres de méthanol technique. On obtient 14,8 g de produit.

GPC               $\bar{M}n = 59.800$
$\bar{M}w = 73.200$
$\Delta M = 1,22$

On fractionne le produit obtenu en introduisant 3,96 g de ce produit dans un flacon Erlenmeyer. Après addition de 200 ml de cyclohexane (qui dissout l'homopolymère d'isoprène et l'homopolymère de styrène présents), on agite pendant 72 heures. On filtre la matière insoluble obtenue. On obtient ainsi 3,41 g (rendement: 86 %) de copolymère.

**Exemple 18**

Préparation d'un polyméthacrylate de méthyle à fonctions carboxyliques terminales

Dans un ballon séché, sous atmosphère d'azote on introduit 0,2 g de LiCl ($4,7.10^{-3}$ moles). On sèche le LiCl dans un bain d'huile à 150°C pendant 3 heures.

Dans le chlorure de lithium ramené à la température ambiante, on introduit, sous azote, 200 ml de THF séché sur benzophénone/sodium, une solution de naphtalène-sodium (agent initiateur) 0,1 molaire dans du THF jusqu'à persistance d'une coloration verte, après quoi on ajoute encore 5 ml de cette solution de naphtalène-sodium ($5.10^{-4}$ moles de naphtalène-sodium).

On porte le mélange à -78°C, puis on y introduit 10 ml (9,3 g) de méthacrylate de méthyle séché sur du triéthyl-aluminium.

On laisse ensuite se dérouler la polymérisation que l'on arrête après 90 minutes par introduction de $CO_2$ gazeux, sous forte agitation.

On précipite l'homopolymère dicarboxylé dans 2 litres de méthanol technique acidifié au moyen d'acide chlorhydrique. Après filtration, on lave abondamment avec du méthanol. On obtient 9,3 g de produit.

On précipite l'homopolymère dicarboxylé dans 2 litres de méthanol technique acidifié au moyen d'acide chlorhydrique. Après filtration, on lave abondamment avec du méthanol. On obtient 9,3 g de produit.

On dissout 2,84 g du produit dans 50 ml d'un mélange 9 : 1 de benzène et de méthanol et on titre les fonctions acides (COOH) au moyen de 6,8 ml d'une solution 0,0203 molaire d'hydroxyde de tétraméthylammonium ($1,36.10^{-4}$ moles) dans un mélange 9 : 1 de benzène et de méthanol.

On obtient les résultats suivants:

GPC
$\bar{M}n = 37.000$
$\bar{M}w = 45.000$
$\Delta M = 1,22$

<u>Titrage:</u>

- nombre de fonctions acides théoriques: $1,54.10^{-4}$
- nombre de fonctions acides titrées: $1,36.10^{-4}$
- fonctionnalité: 1,8.

## Exemple 19

<u>Préparation d'un polyméthacrylate de méthyle à fonctions acides terminales</u>

On opère comme dans l'exemple 18, si ce n'est qu'on n'utilise pas de LiCl.

On obtient 9,1 g de produit présentant une dispersion beaucoup plus grande des masses moléculaires que dans l'exemple 18 et une fonctionnalité nettement moindre que dans cet exemple 18, comme le révèlent les valeurs analytique suivantes:

GPC
$\bar{M}n = 52.400$
$\bar{M}w = 96.100$
$\Delta M = 1,83$

<u>Titrage:</u> après titrage de 2,83 g du produit par $6,0.10^{-5}$ moles d'hydroxyde de tétraméthylammonium:

- nombre de fonctions acides théoriques: $10,08.10^{-4}$
- nombre de fonctions acides titrées: $6,0.10^{-5}$
- fonctionnalité: 1,1

## Exemple 20

<u>Préparation d'un polyacrylate de tert.-butyle à fonctions carboxyliques terminales</u>

Dans un ballon séché, on introduit, sous azote, 0,2 g de LiCl ($5.10^{-3}$ moles) que l'on sèche sous vide dans un bain d'huile à 150 ml de THF séché sur benzophénone/sodium, 0,2 ml (0,18 g) d'α-méthylstyrène séché sur $CaH_2$, une solutiopn 0,1 molaire de naphtalène-sodium dans du THF jusqu'à coloration rouge persistante et enfin 5 ml de cette dernière solution ($5.10^{-4}$ moles de naphtalène-sodium).

On porte le mélange à -78°C et après 15 minutes, on ajoute 70 ml d'une solution à 10 % en volume d'acrylate de tert.-butyle dans du benzène (6,2 g d'acrylate de tert.-butyle).

Après 90 minutes, on arrête la réaction par introduction de $CO_2$ gazeux, sous agitation énergique. Après avoir chassé les solvants, on redissout le polymère carboxylé dans du THF et on le précipite dans un mélange 1 : 3 de méthanol et d'eau acidifié. On obtient 6,1 g de produit.

On dissout 3,82 g du produit obtenu dans un mélange 9 : 1 de benzène et de méthanol et on titre par 11,85 ml d'une solution 0,0184 molaire d'hydroxyde de tétraméthylammonium ($2,18.10^{-4}$ moles de cet hydroxyde).

GPC $\quad$ $\bar{M}n = 27.900$
$\bar{M}w = 36.500$

$$\bar{M}n \text{ théroique} = \frac{\text{masse de monomère}}{\text{quantité d'amorceur}} = 24.800$$

$$\Delta M = 1,31$$

Titrage:

- nombre de fonctions acides théoriques: $2,76.10^{-4}$
- nombre de fonctions acides titrées: $2,18.10^{-4}$
- fonctionnalité: 1,6

En opérant de la manière décrite ci-avant, mais sans utilisation de LiCl, on obtient 5,2 g de produit dont l'analyse GPC révèle une distribution des masses moléculaires bimodale et large.

Les polymères et copolymères obtenus par le procédé suivant l'invention peuvent être aisément transformés, éventuellement dans le même réacteur, en d'autres homopolymères ou copolymères du type acrylate utiles par alcoolyse avec un alcool ou en homopolymères ou copolymères utiles d'acide acrylique par hydrolyse.

Ces transformations sont illustrées dans les exemples suivants:

**Exemples 21**

Transestérification d'un polyacrylate de t.-butyle en polyacrylate de n.-butyle

On transforme un polyacrylate de t.-butyle (PtBuA) en polyacrylate de n.-butyle (PnBuA) par alcoolyse à l'aide de n-butanol, en procédant comme suit:

Dans un ballon de 250 cc, muni d'un réfrigérant lui-même connecté à un autre ballon, on introduit 1,4 g de PtBuA ($1,1.10^{-2}$ moles d'acrylate de t.-butyle, $\bar{M}n = 30.000$), 1,9 g d'acide para-toluène sulfonique monohydraté ($1.10^{-3}$ moles) et 100 cc de n-butanol préalablement séché sur tournures de magnésium. On porte le mélange à 100°C sous un léger courant d'azote et on agite ledit mélange à l'aide d'un agitateur magnétique.

On arrête le chauffage après 60 heures, puis on chasse le solvant et on reprend le résidu par 20 cc d'éther éthylique.

On lave la solution obtenue à trois reprises avec de l'eau et on chasse à nouveau le solvant sous vide. Le polymère obtenu est enfin séché sous vide pendant 24 heures à la température ordinaire.

Analyse du polymère obtenu

Spectre RMN H' : le pic caractéristique du t.-butyle ($\delta = 1,39$ ppm) a disparu avec apparition du pic caractéristique du n.-butyle ($\delta = 3,5$ ppm).

La température Tg a été déterminée par DSC. La valeur enregistrée (-50°C) est très voisine de celle rapportée dans la littérature pour le PnBuA, celle du PtBuA étant de +47°C. Ceci confirme bien la formation de PnBuA pratiquement pur.

**Exemple 22**

Hydrolyse d'un copolymère séquence polystyrène-polyacrylate de t.-butyle (PS-PtBuA)

Dans un ballon muni d'un réfrigérant, on introduit 3 g de PS-PtBuA (65 % de polystyrène et 35 % de polyacrylate de t.-butyle; $\bar{M}n = 50.000$), 95 cc de dioxanne pour analyse et 0,3 g d'acide para-toluène sulfonique monohydraté dissous dans 3 cc d'eau.

On chauffe le mélange au reflux pendant 48 heures et on précipite ensuite le produit obtenu dans de l'heptane. Le produit est ensuite filtré, lavé à l'heptane et plusieurs fois à l'eau, et enfin séché sous vide à la température ordinaire pendant 24 heures.

Analyse du produit

Spectre RMN H' : disparition complète des pics caractéristiques du t.-butyle (S = 1,39 ppm).

Titrage acide-base potentiométrique:
1,5 g du copolymère hydrolysé sont dissous dans 50 ml de dioxanne et titrés par 11,25 ml d'une solutions 0,4 M de KOH dans du méthanol.

$n$COOH titré : $4,5.10^{-3}$ moles
$n$COOH théorique : $4.8.10^{-3}$ moles

Ces résultats montrent que le copolymère PS-PtBuA a été hydrolysé à raison de 94 %.

## Revendications

1. Procédé de polymérisation de monomères acryliques ainsi que de tels monomères avec des co-monomères non acryliques dans au moins un solvant organique de ces monomères, dans lequel on opère la polymérisation à une température d'environ 0° à -78°C en présence d'un système catalytique dissous dans le milieu réactionnel et constitué d'un mélange de:
(a) un agent initiateur ou amorceur de polymérisation de formule

R - M         (I)

dans laquelle M désigne un métal choisi parmi les métaux alcalins et alcalino-terreux et R désigne un radical alkyle à chaîne droite ou ramifiée contenant 2 à 6 atomes de carbone ou un radical aryle, et
(b) un additif constitué d'un sel de métal alcalin ou alcalino-terreux d'un acide minéral.
2. Procédé suivant la revendication 1, caractérisé en ce que l'additif est un halogénure d'un métal alcalin ou alcalino-terreux.
3. Procédé suivant la revendication 2, caractérisé en ce que l'additif est un halogénure de lithium.
4. Procédé suivant la revendication 3, caractérisé en ce que l'additif est du chlorure de lithium.
5. Procédé suivant l'une quelconque des revendications précédentes, caractérisé en ce que le monomère acrylique est choisi parmi les esters des acides acrylique et méthacrylique, les dialkylacrylamides, l'acrylonitrile, le méthacrylonitrile et leurs mélanges.
6. Procédé suivant la revendication 5, caractérisé en ce que le monomère acrylique est un acrylate ou méthacrylate d'alkyle, dont le radical alkyle contient 1 à 18 atomes de carbone.
7. Procédé suivant la revendication 6, caractérisé en ce que le monomère acrylique est l'acrylate ou le méthacrylate de tert.-butyle.
8. Procédé suivant l'une quelconque des revendications 5 à 7, caractérisé en ce que le radical alkyle du monomère acrylique ou méthacrylique est substitué par du fluor, un groupe amino tertiaire ou un groupe carboalcoxy.
9. Procédé suivant l'une quelconque des revendications précédentes, caractérisé en ce que le comonomère non acrylique est choisi parmi le butadiène, l'isoprène, les styrènes éventuellement alkylés, les cyclosiloxanes, le vinylnaphtalène et les vinylpyridines.
10. Procédé suivant l'une quelconque des revendications précédentes, caractérisé en ce que l'agent initiateur est choisi parmi les composés du type butyl-lithium et le naphtalène-sodium.
11. Procédé suivant l'une quelconque des revendications précédentes, caractérisé en ce qu'on fonctionnalise les extrémités de chaîne du polymère ou copolymère acrylique.

## Patentansprüche

1. Verfahren zur Polymerisation von Acrylmonomeren sowie von solchen Monomeren mit nichtacrylischen Co-Monomeren in mindestens einem organischen Lösungsmittel dieser Monomeren, bei welchem man die Polymerisation bei einer Temperatur von etwa 0° bis -78°C in Gegenwart eines Katalysatorsystems vornimmt, welches im Reaktionsmilieu gelöst ist und gebildet ist durch eine Mischung aus:
(a) einem Polymerisationskatalysator- oder -startermittel mit der Formel

R - M         (I),

worin M ein Metall, ausgewählt aus den Alkali- und Erdalkalimetallen, bezeichnet und R eine Alkylgruppe mit gerader oder verzweigter Kette, enthaltend 2 bis 6 Kohlenstoffatome, oder eine Arylgruppe bedeutet, und
(b) einem Additiv, bestehend aus einem Alkalimetall- oder Erdalkalimetallsalz einer Mineralsäure.
2. Verfahren nach Anspruch 1, dadurch gekennzeichnet, daß das Additiv ein Halogenid eines Alkali- oder Erdalkalimetalls ist.

3. Verfahren nach Anspruch 2, dadurch gekennzeichnet, daß das Additiv Lithiumhalogenid ist.

4. Verfahren nach Anspruch 3, dadurch gekennzeichnet, daß das Additiv Lithiumchlorid ist.

5. Verfahren nach einem der vorhergehenden Ansprüche, dadurch gekennzeichnet, daß das Acrylmonomere ausgewählt ist aus Acrylsäure- und Methacrylsäureestern, Dialkylacrylamiden, Acrylnitril, Methacrylnitril und Mischungen davon.

6. Verfahren nach Anspruch 5, dadurch gekennzeichnet, daß das Acrylmonomere ein Alkylacrylat oder -methacrylat ist, dessen Alkylgruppe 1 bis 18 Kohlenstoffatome enthält.

7. Verfahren nach Anspruch 6, dadurch gekennzeichnet, daß das Acrylmonomere tert.Butyl-acrylat oder -methacrylat ist.

8. Verfahren nach einem der Ansprüche 5 bis 7, dadurch gekennzeichnet, daß die Alkylgruppe des Acryl- oder Methacrylmonomeren durch Fluor, eine tert. Aminogruppe oder eine Carboalkoxygruppe substituiert wird.

8. Verfahren nach einem der vorhergehenden Ansprüche, dadurch gekennzeichnet, daß das nichtacrylische Co-Monomere ausgewählt ist aus Butadien, Isopren, gegebenenfalls alkylierten Styrolen, Cyclosiloxanen, Vinylnaphthalin und Vinylpyridinen.

10. Verfahren nach einem der vorhergehenden Ansprüche, dadurch gekennzeichnet, daß das Katalysatormittel ausgewählt ist aus den Verbindungen des Butyl-Lithium- und des Naphthalin-Natrium-Typs.

11. Verfahren nach einem der vorhergehenden Ansprüche, dadurch gekennzeichnet, daß man die Enden der Polymer- oder Acryl-Copolymer-Kette funktionalisiert.

## Claims

1. Process for polymerizing acrylic monomers as well as such monomers with non-acrylic comonomers in at least one organic solvent of these monomers, in which the polymerization is made at a temperature of about 0° to -78°C in the presence of a catalytic system dissolved in the reaction medium and constituted of a mixture of:
   (a) an initiating agent or initiator of polymerization of formula

R - M $\qquad$ (I)

in which M means a metal selected among the alkaline and alkaline-earth metals and R means an alkyl radical having a straight or branched chain containing 2 to 6 carbon atoms or an aryl radical, and
   (b) an additive consisting of a salt of alkaline or alkaline-earth metal of a mineral acid.

2. Process according to claim 1, characterized in that the additive is a halide or an alkaline or alkaline-earth metal.

3. Process according to claim 2, characterized in that the additive is a lithium halide.

4. Process according to claim 3, characterized in that the additive is lithium chloride.

5. Process according to anyone of the preceding claims, characterized in that the acrylic monomer is selected among the esters of acrylic and methacrylic acids, the dialkylacrylamides, the acrylonitrile, the methacrylonitrile and the mixtures thereof.

6. Process according to claim 5, characterized in that the acrylic monomer is an alkyl acrylate or methacrylate, in which the alkyl radical contains 1 to 18 carbon atoms.

7. Process according to claim 6, characterized in that the acrylic monomer is tert.-butyl acrylate or methacrylate.

8. Process according to anyone of the claims 5 to 7, characterized in that the alkyl radical of the acrylic or methacrylic monomer is substituted by fluorine, a tertiary amino group or a carbalkoxy group.

9. Process according to anyone of the preceding claims, characterized in that the non-acrylic comonomer is selected among the butadiene, the isoprene, the styrenes which may possibly be alkylated, the cyclosiloxanes, the vinyl naphthalene and the vinyl pyridines.

10. Process according to anyone of the preceding claims, characterized in that the initiating agent is selected among the compounds of the butyl-lithium and naphthalene-sodium types.

11. Process according to anyone of the preceding claims, characterized in that the ends of the chain of the acrylic polymer or copolymer is functionalized.